# EUROPÄISCHE PATENTANMELDUNG

(11) **EP 1 426 669 A2**
(43) Veröffentlichungstag der Anmeldung: **09.06.2004**
(21) Anmeldenummer: 03025772.9
(22) Anmeldetag: 11.11.2003
(51) Int. Cl.: F16L 25/00, F16L 11/15, F16L 37/098

(54) **Wellrohr-Verbindungsanordnung sowie Wellrohr**

(30) Priorität: 03.12.2002 DE 20218734 U
(71) Anmelder: Fränkische Rohrwerke Gebr. Kirchner GmbH + Co KG, 97486 Königsberg/Bayern (DE)
(72) Erfinder: Schroeter, Sören, 96049 Bamberg (DE)
(74) Vertreter: Schwabe - Sandmair - Marx

(57) **Zusammenfassung**

Die vorliegende Erfindung betrifft eine Wellrohr-Verbindungsanordnung mit einem Wellrohr (20) mit quer zu seiner Längserstreckungsrichtung erstreckten Wellungen (22), die im Wesentlichen in gleichen Abständen zueinander angeordnet sein können, wobei das Wellrohr (20) an wenigstens einem Ende mit einem einstückigen Glattbereich (10) ausgebildet ist, der einen Widerlagerabschnitt (14) umfasst, und mit einem Verbindungselement (50), das mit dem Glattbereich (10) zusammenführbar ist und mit dem Widerlageabschnitt (14) in Eingriff bringbar ist.

## Beschreibung

Die Erfindung betrifft Wellrohre sowie Wellrohr-Verbindungsanordnungen. Dabei umfasst die Wellrohr-Verbindungsanordnung ein Wellrohr mit quer zu seiner Längserstreckungsrichtung erstreckte Wellungen, die im wesentlichen in gleichen Abständen zueinander angeordnet sein können, wobei das Wellrohr wenigstens einen Endbereich aufweist, gemäß dem Anspruch 1 bzw. gemäß dem Anspruch 13, sowie gemäß dem Anspruch 21 bzw. gemäß dem Anspruch 25. Ferner betrifft die Erfindung eine Kunststoffwellrohr-Verbindungsanordnung gemäß dem Anspruch 28 und ein Kunststoffwellrohr gemäß dem Anspruch 39.

Im Stand der Technik sind verschiedenste Einsatzbereiche für Wellrohre bekannt. Wellrohre werden inzwischen als Spritzwasserleitungen eingesetzt, um Spritzwasser von einem Vorratstank innerhalb eines Kraftfahrzeuges zu einer Auslassdüse zu befördern. Ein solcher Einsatzzweck verlangt eine Verbindung, die auch bei höheren Drücken sehr widerstandsfähig ist und unter hohem Druck nicht undicht wird. Hierbei werden häufig Verbindungselemente auf Wellrohre bzw. Glattrohre aufgeschossen und miteinander über eine radiale Verpressung in eine dauerhafte Verbindung gebracht. Die Verbindungselemente müssen aus besonderem Kunststoff sein, um etwa kraftstoffbeständig zu sein und um ein Kriechen von Kunststoff zu verhindern, das unter mechanischer Belastung vorkommen kann, und das unter Dauerbelastung zu Undichtigkeiten führen könnte.

Auch ansonsten ist es auf anderen Fachgebieten erforderlich, Wellrohre miteinander zu verbinden, sei dieses drucklos oder auch bei Anwendungen, bei denen Drücke über dem atmosphärischen Druck auftreten. Jedenfalls werden mehrere Verbindungselemente, Festlegungselement und dgl. benötigt.

Gemäß dem Stand der Technik ist es folglich erforderlich, Verbindungselemente in Wellrohre einzuschießen, um dann die so vorbereiteten Wellrohrenden mit handelsüblichen Konnektoren in Verbindung treten lassen zu können.

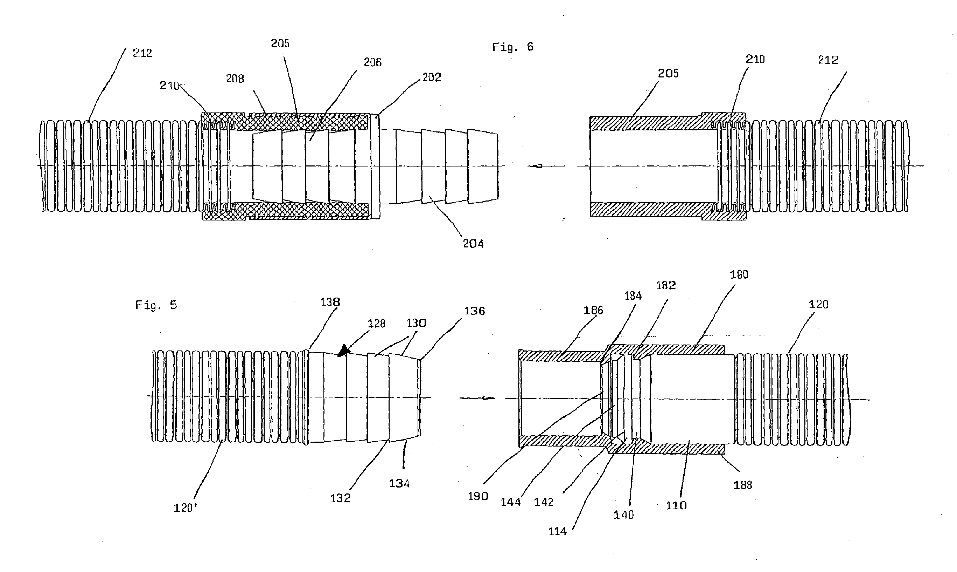

Eine aus dem Stand der Technik bekannte Verbindungsanordnung zur Verlängerung eines Schlauches bzw. einer Leitung ist in Fig. 6 dargestellt. Ein Verlängerungsadapter 204, 202, 206 ist vorgesehen, derart, dass auf beide Enden des Adapters ein Schlauch bzw. ein Rohr 212 mit einer Verbindungsmuffe 205 aufgesteckt werden kann. Hier ist es erforderlich, den Schlauch bzw. das Wellrohr 212 in einem sehr aufwändigen Verfahren mit der Muffe 205 zu versehen, indem die Muffe 205 in einem Verbindungsbereich 210 angespritzt wird. Anschließend wird die Muffe auf die Stützhülse 204 des Verlängerungsadapters aufgeschoben, wo eine sägezahnartige Eingriffs- und Dichtstruktur vorgesehen ist, die aus einander anschließenden Sägezahnprofilen gebildet ist. Mit einer Metallhülse 208 wird die Verbindung mechanisch fixiert, wobei die Metallhülse 208 zu verpressen ist, um durch die Verformung der Hülse 208 das Material der Muffe 205 in die Profilierung der Sägezahnstruktur hineinzuexpandieren.

Es ist klar, dass eine derartige Verbindungsanordnung nicht nur sehr aufwändig ist, sondern auch Anlass für Dichtprobleme gibt.

Es ist folglich eine Aufgabe gemäß der vorliegenden Erfindung, eine neue Verbindungstechnik zur Verfügung zu stellen, um Wellrohre anschließen zu können, wobei eine derartige Verbindungstechnik besonders für Anwendungen mit geringem Druck bzw. drucklose Anwendungen gedacht ist.

Insbesondere soll eine neue Anschlussmöglichkeit für Tankentlüftungen, Batterieentlüftungen oder dgl. zur Verfügung gestellt werden.

Ferner soll eine neue Anschlusstechnologie zur Verfügung gestellt werden, mit der mit geringerem Arbeits- und Materialaufwand zurecht gekommen werden kann.

Unter einer Anwendung mit geringem Druck ist dabei auch eine Anwendung in einem Druckbereich von 0,1 bis 0,7 bar, insbesondere 0,3 bis 0,5 bar zu verstehen. Unter einer drucklosen Anwendung ist auch eine Anwendung nahe dem atmosphärischen Druck zu verstehen.

Gemäß der Erfindung wird dies dadurch erreicht, dass das Wellrohr an wenigstens einem Ende mit einem einstückigen Glattbereich ausgestattet ist, der einen Widerlagerabschnitt umfasst. Ein erfindungsgemäß einsetzbares Verbindungselement ist mit dem Glattbereich zusammenführbar, und der Widerlagerabschnitt am Glattbereich des Wellrohres ist mit dem Verbindungselement in Eingriff bringbar.

Wellrohre der erfindungsgemäßen Art werden endlos mittels eines Korrugators hergestellt, der in den bekannten Überdruck- oder Unterdruckvarianten ausgeführt sein kann. Im Falle der Überdruckvariante wird in einen warmplastisch verformbaren Kunststoffschlauch ein Stempel eingeführt, und im Bereich zwischen einer Auslassdüse eines Extruders und innerhalb des Formkanals eines Korrugators wird ein Überdruck aufgebaut, über den das weichplastisch verformbare Kunststoffmaterial in die Halbformen des Korrugators gedrängt wird, die einen geschlossenen Formkanal bilden. Im Falle einer Unterdruckvariante eines Korrugators wird zwischen der warmplastisch verformbaren Wandung des Kunststoffschlauches und den zu dem Formkanal zusammengeführten Halbformen ein Unterdruck aufgebaut, durch den das Kunststoffmaterial in das Profil eingezogen wird, um dem Kunststoffschlauch dieses Profil einzuprägen. In jedem Falle wird der geformte Kunststoffschlauch abgekühlt, so dass das Rohr und sodann Wellrohr in einen nicht verformbaren Zustand übergeleitet wird.

Im Verlaufe eines solchen Wellrohres werden erfindungsgemäß glatte Bereich bzw. Widerlagerabschnitte in der voreingestellten Form eingeprägt. Ein solches Rohr kann dann an den gewünschten Stellen geschnitten werden, um einzelne Wellrohrabschnitte mit erfindungsgemäßer Ausprägung herstellen zu können.

In Bezug auf das Verbindungselement gemäß der Erfindung ist festzuhalten, dass dieses Verbindungselement prinzipiell nach dem Stand der Technik ausgebildet sein kann bzw. daraus gebildet ist. Die wesentlichen Merkmale gemäß der Erfindung sind auf den einstückig vorgesehenen Glattbereich zu lesen, der eine für den Niederdruckeinsatzbereich prädestinierte Wellrohr-Verbindungsanordnung ermöglicht, die effizient, kostengünstig und zukunftsorientiert ist.

Vorteilhafterweise ist der Widerlagerabschnitt wenigstens teilumfänglich, bevorzugt vollumfänglich ausgebildet. Um einen sicheren Eingriff bilden zu können, reicht eine teilumfängliche Ausbildung aus, die materialeinsparend vorgesehen werden kann. Um eine besondere mechanische Stabilität garantieren zu können, ist es zu bevorzugen, einen vollumfänglich radial außen vorgesehenen Widerlageabschnitt am Glattbereich vorzusehen.

Dabei kann der Widerlagerabschnitt insbesondere als radial abstehende Rippe, als Ring oder dgl. ausgebildet sein. Eine solche Form lässt sich im Korrugator gut herstellen und garantiert eine dauerhafte Festigkeit.

Vorteilhafterweise ist zwischen dem Widerlagerabschnitt und den Wellungen ein Anschlussabschnitt vorgesehen, der so ausgebildet sein kann, dass handelsübliche Konnektoren eingesetzt werden können. Dieser Anschlussabschnitt kann an die zum Einsatz kommenden Konnektoren gesondert angepasst sein oder kann an eine breite Palette von Konnektoren so angepasst sein, dass maximale Konnektor-Abmessungen berücksichtigt sind.

Bevorzugt ist der Anschlussabschnitt eben ausgebildet, d.h., auch dieser bildet einen glatten Bereich, der ohne Wellungen ausgebildet ist.

Bevorzugt weist das erfindungsgemäß einzusetzende Verbindungselement wenigstens eine Dichteinrichtung auf, die mit dem Glattbereich in eine dichtende Anlage bringbar ist. Als Dichteinrichtung empfiehlt sich etwa ein O-Ring, der im Innenumfang des manschetten- bzw. ringförmig ausgebildeten Wellrohranschlussbereiches des Verbindungselementes bzw. Konnektors ausgeformt ist.

Das Verbindungselement weist vorteilhafterweise eine Anlageeinrichtung auf, die in den Aufnahmeraum für den Glattbereich, diesen umgebend, einfügbar ist. Dabei kann das Dichtelement zwischen der Anlageeinrichtung und einem Schulterbereich aufgenommen sein. Wird der O-Ring in das Verbindungselement eingebaut, kann über die Anlageeinrichtung der O-Ring in dem Verbindungselement in Axialrichtung festgelegt werden, so dass dieser einerseits nicht mehr aus dem Verbindungselement herausfallen kann, andererseits aber mit dem Glattbereich des erfindungsgemäßen Wellrohres in eine dichtende Anlage bringbar ist.

Vorteilhafterweise kann die Anlageeinrichtung innerhalb des Verbindungselementes festgelegt werden, in dem die Anlageeinrichtung eine Radialerstreckung aufweist, die auswärts erstreckt ist, und die in eine Rastausnehmung an dem Innenumfang des Verbindungselementes einzugreifen vermag, um eine montierbare Anordnung bilden zu können.

Vorteilhafterweise ist das Verbindungselement mit einem Verschlusselement versehen, das radial einwärts erstreckt ist und das über wenigstens eine Ausnehmung in dem Verbindungselement reversibel in Widerlage gegenüber dem Widerlageabschnitt des Wellrohres bringbar ist. Dabei kann das Verschlusselement etwa als gabelartiges Sperrglied oder dgl. ausgebildet sein. Es kann auch als über ein Filmscharnier oder dgl. an dem Verbindungselement festgesetztes und in eine Verschlussstellung verschwenkbares Rastelement ausgebildet sein. Der Fachmann kann hier diverse Möglichkeiten aus dem Stand der Technik, die folglich hier nicht weiter ausgeführt werden müssen.

Gemäß einem weiteren Aspekt der vorliegenden Erfindung wird eine Wellrohr-Verbindungsanordnung mit einem Wellrohr mit quer zu seiner Längserstreckungsrichtung erstreckten Wellungen vorgeschlagen, wobei das Wellrohr an wenigstens einem seiner Endbereiche mit einem integral mit dem Wellrohr ausgebildeten Anschlussbereich versehen ist, der in einem Muffenverbindungsabschnitt einfügbar ist, wobei der Anschlussbereich zur Verbindung mit dem Muffenverbindungsabschnitt mit wenigstens einem, bevorzugt mehreren in der Einschubrichtung zulaufenden sägezahnartigen Profilen versehen ist, die in Anlage zu dem Innenumfang des Muffenverbindungsabschnittes bringbar sind. Wenn die Muffe etwa bevorzugt aus dem Kunststoffmaterial TPE ist, kann das Kunststoffmaterial des Wellrohres durch Komprimierung des Muffenmaterials mit dem Muffenmaterial in Eingriff gelangen. Natürlich ist es von Vorteil, wenn diverse sägezahnartige Profile vorgesehen sind.

Bevorzugt ist der Innenumfang des Muffenverbindungsabschnittes wenigstens bereichsweise vollumfänglich glattwandig, damit die letztlich in der Montagesituation erforderliche Lage der sägezahnartigen Profile nicht genau eingehalten werden muss, um die gewünschten Dichteffekte zu erzielen.

Um das Einführen des Endbereiches des Wellrohres zu erleichtern, ist es von Vorteil, wenn das sägezahnartige Profil in der Einschubrichtung eine ansteigende Flanke hat, die in Bezug auf die Einschubrichtung spitzwinklig ist, so dass beim Einschieben kein größerer Widerstand entstehen kann.

Umgekehrt ist es von Vorteil, um größere Haltekräfte aufbringen zu können, wenn das sägezahnartige Profil auf der Rückseite der ansteigenden Flanke eine steil abfallende bzw. steil ansteigende Flanke aufweist, die entgegengesetzt zur Einschubrichtung einen großen Widerstand aufbringt, falls versucht wird, das Wellrohr oder dessen Endbereich aus dem Muffenverbindungsabschnitt herauszureißen.

Gemäß einem weiteren Gesichtspunkt der vorliegenden Erfindung wird ein Wellrohr zur Verfügung gestellt, das wenigstens einen Wellrohrabschnitt aufweist und an wenigstens einem Endbereich mit einem Anschlussbereich versehen ist, der wenigstens ein, bevorzugt mehrere sägezahnförmige Profile aufweist, wobei der Anschlussbereich integral mit dem Wellrohr bzw. dessen Wellrohrabschnitt ausgebildet ist. Generell ist festzuhalten, dass ein erfindungsgemäßes Wellrohr auch einzelne glattwandige Abschnitte aufweisen kann, insbesondere um Bereiche leitungstechnisch zu überbrücken, in denen das Rohr nicht verformt werden muss.

Ein weiterer Aspekt der vorliegenden Erfindung bezieht sich auf eine Kunststoffwellrohr-Verbindungsanordnung mit einem Kunststoffwellrohrabschnitt mit quer zu seiner axialen Längserstreckungsrichtung erstreckten Wellungen, mit einem integral ausgebildeten Stutzenabschnitt an wenigstens einem Ende, wobei der Stutzenabschnitt einen ersten Durchmesserbereich aufweist, wobei in den ersten Durchmesserbereich wenigstens ein Dicht- und/oder Halteelement einsetzbar ist. Dieses kann bevorzugt durch eine Konnektoreinrichtung in Position gehalten werden. Eine derartige Kunststoffwellrohr-Verbindungsanordnung lässt sich bezüglich seiner Hauptbestandteile, also dem Wellrohrabschnitt und dem Stutzenabschnitt einstückig bzw. integral durch ein Korrugationsverfahren herstellen. Bekanntermaßen wird in einem solchen Korrugationsverfahren ein Wellrohr mit seinen eingeformten Strukturen einstückig endlos hergestellt. Im vorliegenden Falle wird aus einer Extruderdüse ein warmplastisch verformbarer Kunststoffschlauch ausgegeben und in die Formstrecke eines Korrugators eingeleitet. Dort wird in einem durch Halbformen gebildeter Formkanal die Strukturierung des erfindungsgemäßen Wellrohres bzw. der erfindungsgemäßen Kunststoffwellrohr-Verbindungsanordnung vorgenommen. Dabei weisen einige der geschlossenen Halbformen die Wellungen auf und andere weisen die Form des Stutzenabschnittes auf. Wird ein solches endlos hergestelltes Kunststoffwellrohr bzw. Kunststoffwellrohr-Verbindungsanordnung an den jeweiligen Stellen abgeschnitten, ergeben sich einzelne Kunststoffwellrohrabschnitte mit erfindungsgemäßen Kunststoffwellrohr-Verbindungsanordnungen.

Wird nun ein Glattbereich gemäß dem Gesichtspunkt nach den Ansprüchen 1 bis 24 der Erfindung in einen Stutzenabschnitt gemäß den Ansprüchen 28 bis 39 eingeführt, verpresst dieser Glattbereich das wenigstens eine Dicht- und/oder Halteelement radial nach außen und bewerkstelligt einerseits eine Dichtung der Verbindung und bewerkstelligt andererseits zusätzlich eine mechanische Festlegung.

Dabei kann zur zusätzlichen Fixierung auch noch in Axialrichtung des Wellrohres bzw. in Axialrichtung des Stutzenabschnittes eine Verpressung der Dicht- und/oder Haleelemente erfolgen. Als Dicht- und/oder Halteelemente können dabei etwa O-Gummiringe oder dgl. verwendet werden. Durch den besagten axialen Andruck kann eine zusätzliche Haltekraft und ggf. eine zusätzliche Dichtheit auch bei größeren Drücken zur Verfügung gestellt werden.

Vorteilhafterweise betrifft die Erfindung auch eine Kunststoffwellrohr-Verbindungsanordnung, bei der das Dicht- und/oder Halteelement aus einem einstückig hergestellten Teil aufgebaut ist, das einen Haltefunktionsbereich und wenigstens einen Dichtfunktionsbereich umfasst. D.h., durch den Haltefunktionsbereich kann es ermöglicht werden, dass das Dicht- und/oder Halteelement in seiner korrekten Stellung innerhalb der Verbindungsanordnung gehalten werden kann und der wenigstens eine Dichtfunktionsbereich ist in Anlage einerseits zu einem Glattbereich an dem anzuschließenden Wellrohr und andererseits zu dem Glattbereich innerhalb des integral ausgebildeten Stutzenabschnittes, um so eine mechanisch haltbare und dichte Verbindung bereitstellen zu können. Um den Haltefunktionsabschnitt innerhalb des integral ausgebildeten Stützenabschnittes halten zu können, und vorzugsweise innerhalb des ersten Durchmesserbereiches des Stutzenabschnittes halten zu können, kann vorteilhafterweise ein dem Haltefunktionsabschnitt des einstückig hergestellten Teils zugeordneter Eingriffsfunktionsbereich am Innenumfang der benannten Bestandteile vorgesehen sein, der das einstückig hergestellte Teil bzw. das Dicht- und/oder Halteelement in Axialrichtung hält. Hierdurch kann dieser Aspekt gemäß der Erfindung gebrauchsfertig vormontiert werden und es besteht nicht die Gefahr, dass während eines Transportes oder bei der Montage einzelne Bestandteile verloren gehen können. Ferner ist die Montage vereinfacht, da weniger Einzelteile vorhanden sind und die Gesamtanordnung ist mechanisch stabiler.

Besonders vorteilhaft ist das einstückig hergestellte Teil, wenn dieses zwei Dichtfunktionsbereiche umfasst, die in Axialrichtung der Anordnung symmetrisch oder asymmetrisch zu dem Haltefunktionsbereich angeordnet sind. Dabei kann auch der Haltefunktionsabschnitt selbst zusätzlich eine innenumfänglich vorgesehene Dichtfläche aufweisen.

Für den Fall, dass mehrere Dicht- und/oder Halteelemente in der Form etwa von O-Ringen eingesetzt werden, ist es von Vorteil, zwischen diesen Abstandsringe einzusetzen, die nicht verformbar sind, so dass die O-Ringe nicht axial in die durch benachbarte O-Ringe freigelassenen Freiräume ausweichen können, wodurch die Dicht- und/oder Haltefunktion beeinträchtigt werden könnte. Dabei kann durch die zusätzliche Anordnung von weiteren Dicht- und/oder Halteelementen mit dazwischenliegenden Abstandsringen noch eine zusätzliche Dicht- und/oder Haltefunktion erzielt werden.

Vorteilhafterweise ist ein Riegelabschnitt am Außen- und/oder am Innenumfang des Stutzenabschnittes vorgesehen. Entsprechend ist ein Korrespondenzabschnitt an der Konnektoreinrichtung dazu in der Lage, mit dem Riegelabschnitt in eine Verriegelungsstellung zu treten, um die Dicht- und/oder Halteelemente und ggf. auch den Glattbereich des anschließenden Wellrohres unabhängig vom anfallenden Druck bzw. von anderen mechanischen Belastungen in seiner funktionsgerechten Stellung zu halten. Dabei kann es sich um den Riegelabschnitt in Verbindung mit dem Korrespondenzabschnitt um eine Rastverbindung, eine Schraubverbindung oder eine sonstige herkömmliche Verbindung, wie etwa eine Bajonettverbindung oder dgl. handeln.

Besonders vorteilhaft ist es, wenn zwei Wellrohre aneinander anzuschließen sind, dass das eine Wellrohr einen Verbindungsabschnitt gemäß wenigstens einem der Ansprüche 1 bis 27 an einem Ende aufweist, während das andere Wellrohr eine Kunststoffwellrohr-Verbindungsanordnung gemäß einem der Ansprüche 1 bis 35 an wenigstens einem Ende umfasst. Dementsprechend weist ein sehr vorteilhaftes Kunststoffwellrohr eine Kunststoffwellrohr-Verbindungsanordnung an einem Ende auf, das gemäß wenigstens einem der Ansprüche 28 bis 35 ausgebildet ist, während dieses an seinem anderen Ende eine Verbindungsanordnung gemäß wenigstens einem der Ansprüche 1 bis 24 aufweist.

Nachfolgend wird die vorliegende Erfindung anhand der beigefügten Figuren unter Bezugnahme auf die Figurenbeschreibung näher erläutert. Dabei werden weitere Zielsetzungen, Merkmale und Vorzüge der Erfindung offenbart, die zu Gegenständen von Ansprüchen gemacht werden können. Es zeigen:
- Fig. 1: eine Ausführungsform eines Wellrohres mit Merkmalen gemäß der Erfindung in einer Seitenansicht;
- Fig. 2: einen Endbereich eines erfindungsgemäßen Wellrohres in einem axialen Längsschnitt;
- Fig. 3: eine Schnittdarstellung durch ein erfindungsgemäß einsetzbares Verbindungselement bzw. einen Konnektor;
- Fig. 4: ein gemäß den Fig. 1 und 2 ausgebildetes Wellrohr, das in einen Konnektor gemäß Fig. 3 eingefügt ist, wobei der Konnektor in Schnittdarstellung gezeigt ist, während das Wellrohr in einer Seitenansicht dargestellt ist; und
- Fig. 5: in einer teilweise geschnittenen Darstellung eine Wellrohr-Verbindungsanordnung gemäß einem weiteren Gesichtspunkt nach der vorliegenden Erfindung sowie ein Wellrohr gemäß einem weiteren Gesichtpunkt nach der vorliegenden Erfindung;
- Fig. 6: in einer teilweise geschnittenen Darstellung eine Wellrohr-Verbindungsanordnung gemäß dem Stand der Technik; und
- Fig. 7: ein Wellrohr mit einem integral angeformten Anschlussstutzen in einer längsschnittlichen Darstellung;
- Fig. 8: ein Wellrohr mit Anschlussstutzen gemäß Fig. 7 mit zugehöriger Konnektoreinrichtung jeweils in einem Längsschnitt und einer seitlichen Ansicht eines Glattbereiches eines anschließenden Wellrohres etwa gemäß den Fig. 1 und 2 vor Herstellung einer Verbindung;
- Fig. 9: einen Längsschnitt durch eine fertiggestellte Verbindung mit den Bestandteilen gemäß Fig. 8;
- Fig. 10: eine weitere Ausführungsform mit Merkmalen gemäß der Erfindung in einer teilweisen längsschnittlichen Ansicht; und
- Fig. 11: eine weitere Ausführungsform mit Merkmalen gemäß der Erfindung, in einer weiteren teilweise längsschnittlich angelegten Darstellung.

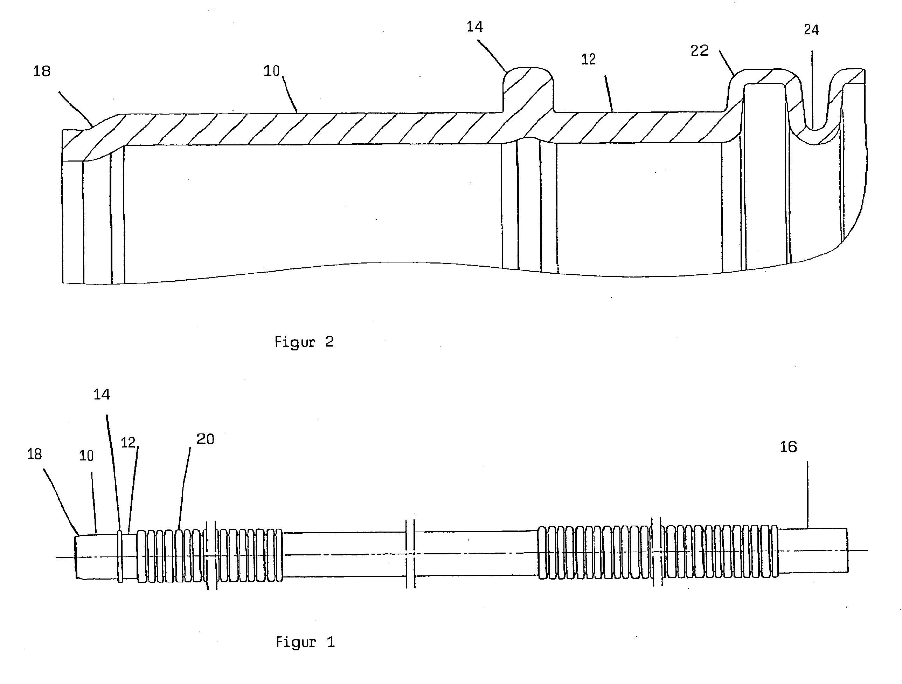

In den Fig. 1 bis 4 dargestellte gleiche oder wenigstens gleichwirkende Mittel sind mit gleichen Bezugszeichen benannt, so dass eine mehrfache Erwähnung der gleichen Bestandteile nicht erforderlich ist.

In Fig. 1 ist ein Wellrohre mit einem Wellrohrbereich 20 und mit Endbereichen 16 dargestellt. Der Wellrohrbereich 20 gemäß den Fig. 1, 2 und 4 weist Wellenberge 22 und Wellentäler 24 auf.

Erfindungsgemäß ist ein Glattbereich 10, 12 vorgesehen, der einstückig bzw. integral mit dem Wellrohr 20 ausgebildet ist. Wie insbesondere Fig. 2 zu entnehmen ist, ist der Glattbereich mit dem Widerlagerabschnitt, der als angeformter Adapter bezeichnet werden kann, mit einer dickeren Wandung ausgebildet, als der angrenzende Wellrohrbereich mit den Wellungen 22 und Wellentälern 24. Dies garantiert eine gute Stabilität im Bereich des einstückig vorgesehenen Glattbereiches 10, 12 bzw. des Adapters 10, 12.

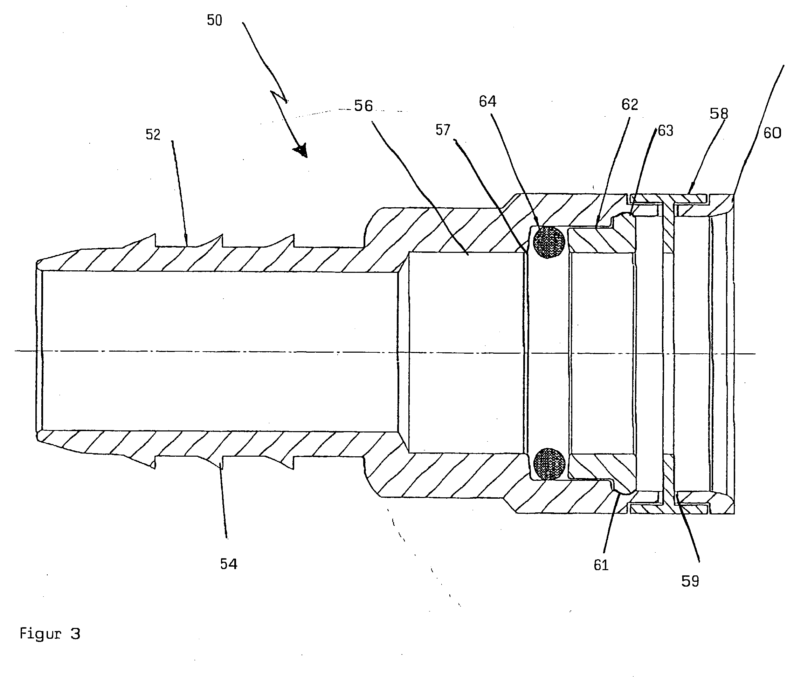

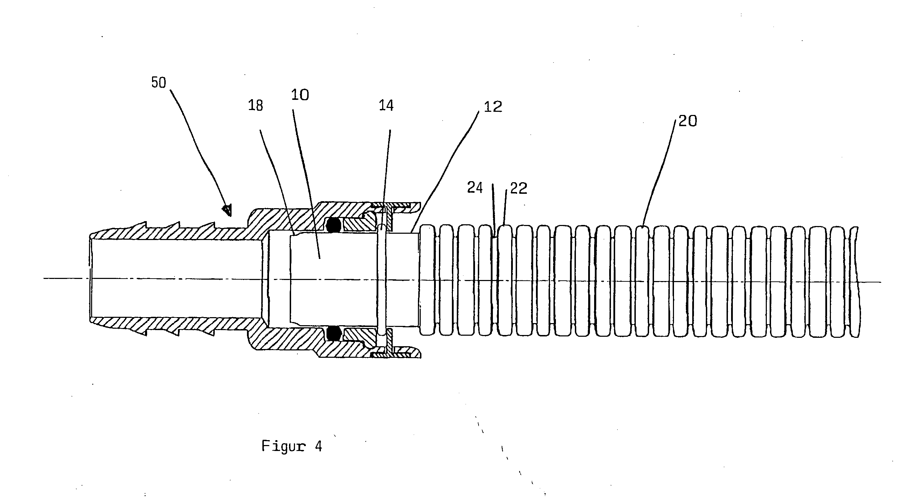

Der Glattbereich 10 stellt an seinem Außenumfang eine glatte Oberfläche zur Verfügung, die mit einem Dichtelement bzw. einem O-Ring 64 (siehe Fig. 3) in Kontakt treten kann, um den Glattbereich 10 und das erfindungsgemäße Wellrohr dichtend anschließen zu können, insbesondere an einen Konnektor bzw. ein Verbindungselement 50 gemäß den Fig. 3 und 4.

Das erfindungsgemäße Wellrohr weist an seinem Glattbereich 10, 12, der auf wenigstens einer Seite bzw. einem Ende des Wellrohres vorgesehen sein kann, einen Widerlageabschnitt auf, über den ein haltender Eingriff mit einem Verbindungselement bzw. einem Konnektor 50 bewerkstelligt werden kann.

Um das Einführen des Wellrohradapterbereiches 10, 14, 12 in einen Konnektor bzw. ein Verbindungselement 50 zu vereinfachen, kann der Adapter 10, 12, 14 an seinem dem Verbindungselement 50 zugeordneten Ende mit einem sicher verjüngenden Abschnitt 18 versehen sein, um den Adapter in den Öffnungsbereich des Verbindungselementes bzw. des Konnektors 50 leichter einführen zu können.

Der Widerlagerabschnitt 14 ist als ringförmige, radial von der Rohrmittelachse nach außen erstreckte Materialansammlung ausgebildet. Wie bereits angedeutet, ist das erfindungsgemäße Rohr aus Kunststoff hergestellt und wird gemäß einem Korrugator geformt. Der Widerlagerabschnitt 14 ist als kontinuierliche ringförmige, radial nach außen gehende Erstreckung wiedergegeben, kann jedoch auch lediglich in Form von teilumfänglichen Abschnitten vorgesehen sein.

Das Verbindungselement 50 gemäß Fig. 3 weist einen Anbindungsbereich 52 mit Rasterstreckungen 54 auf, um beispielsweise in eine Tanköffnung eingreifen zu können. ein Muffenbereich schließt an den Anbindungsbereich 52 an, der einen zylinderförmigen Hohlraum aufweist, um einen Endbereich eines erfindungsgemäßen Wellrohres aufnehmen zu können. Dabei kommt der Glattbereich 10 des Wellrohres gemäß der Erfindung innerhalb des zylindrischen Hohlraumes 56 zu liegen und ein Teil des Glattbereiches 10 kommt gegenüber einer Dichteinrichtung bzw. einem O-Ring 64 zu liegen, um wenigstens im Niederdruckbereich bzw. für drucklose Anwendungen eine ausreichende Dichtwirkung bereitstellen zu können. Die O-Ringdichtung 64 ist zwischen einem Schulterabschnitt 54 am Innenumfang des Muffenbereiches und einer Anlageeinrichtung 62 in Axialrichtung fixiert. Dabei ist die Anlageeinrichtung 62 mit einer Eingriffs- bzw. Rasterstreckung 63 ausgebildet, die in einem Rasteingriff mit einer Ausnehmung 61 am Innenumfang des muffenartigen Abschnittes des Verbindungselementes bzw. Konnektors 50 zu treten vermag.

Über eine bzw. mehrere Ausnehmungen 59 an der Muffe kann ein Verschlusselement 58 radial nach innen in den Konnektor 50 eingreifen, um zwischen der Anlageeinrichtung 62 und dem Verschlusselement 58 den Widerlagerabschnitt 14 des erfindungsgemäß ausgebildeten Rohres festzulegen, so dass das Rohr in Axialrichtung festgelegt ist und nicht mehr aus dem Verbindungselement bzw. Konnektor 50 entnommen werden kann. Ein leicht trichterartig ausgebildeter Öffnungsabschnitt 60 des Verbindungselementes bzw. Konnektors 50 sorgt in Verbindung mit dem sich verjüngenden Endabschnitt 18 am konnektorseitigen Ende des Glattbereiches 10 für eine vereinfachte Einführung bzw. den Wegfall von scharfen Kanten.

In Fig. 5 ist eine weitere Ausführungsform gemäß der Erfindung dargestellt. Einerseits wird hier ein Wellrohr mit einem Anschlussbereich 128 gemäß einem Gesichtspunkt der Erfindung dargestellt und andererseits wird eine Wellrohr-Verbindungsanordnung 180 mit einem bereits angeschlossenen Wellrohr 120 gemäß einem weiteren Gesichtspunkt nach der vorliegenden Erfindung gezeigt.

Das Wellrohr 120' mit dem Anschlussbereich 128 weist eine Öffnung 136 auf, die im eingebauten Zustand in den Anschlussabschnitt 186 der Muffe 180 gegenüber der Öffnung 144 des Anschlussabschnittes 110 des Wellrohres 120 zu liegen kommt.

Der Anschlussabschnitt 128 weist eine sägezahnartige Profilierung 130 auf, wobei jeder der Sägezähne eine in Einschubrichtung in die Muffe 180 ansteigende Flanke 134 aufweist, die mit einem relativ kleinen Winkel ansteigt, so dass beim Einschieben des Anschlussabschnittes 128 keine größeren Widerstände auftreten können. Auf der Rückseite der Flanke 134 ist eine sehr steil abfallende Flanke 132 vorgesehen, die beim Abziehen bzw. Ausreißen des Wellrohres 120' bzw. dessen Anschlussbereiches 128 aus dem Abschnitt 186 der Muffe 180 einen großen Widerstand entgegensetzt. Durch die Ausgestaltung der Sägezähne 130 in der dargestellten Weise in Verbindung mit dem Expansionsverhalten des Materials der Muffe 180 können große Haltekräfte aufgebracht werden. Gesteigert kann dies noch werden, indem um den Abschnitt 186 der Muffe 180 zusätzlich ein Pressring gelegt wird, der nach dem Einführen des Anschlussbereiches 128 in dem Abschnitt 186 verpresst werden kann.

Der Anschlussbereich 128 weist an seinem von der Öffnung 136 abgewandten Ende einen Anschlag 138 auf, der gegen die Stirnseite des Abschnittes 186 der Muffe 180 anstößt, um die Einschubbewegung zu begrenzen, so dass der Anschlussbereich 128 jeweils in eine definierte Lage in dem Abschnitt 186 der Muffe 180 gelangt. Der radial einwärts erstreckte Ansatz 184, der umfänglich über den gesamten Innenumfang der Muffe 180 vorgesehen sein kann, kann eine gewisse Dichtwirkung entfalten und der Übergangsbereich zwischen der radial einwärts erstreckten Schulter 184 und dem Anschlussbereich 110 des Rohres 120 kann der Leitungsanpassung dienen, beispielsweise um Strömungsgeräusche oder dgl. zu reduzieren. Ein dazu vorgesehener Übergangsbereich 190 ist jedoch nicht wesentlich im Hinblick auf die vorliegende Erfindung.

Der Anschlussbereich 110 des Wellrohres 120 weist einen glattwandigen Abschnitt auf, der unmittelbar im Zusammenhang mit dem Bezugszeichen 110 steht. An dem glattwandigen Bereich grenzt eine Einschnürung 140 an, auf die ein rippenartiger Widerlagerabschnitt 114 folgt. Die Struktur der Einschnürung 140 in Verbindung mit dem rippenartigen Widerlager 114 tritt in einen haltenden Eingriff mit einer radial einwärts ausgerichteten Rastschulter 182 der Muffe 180. In Einführrichtung für den Anschlussabschnitt 110 des Wellrohres 120 ist vor dem Widerlager 114 ein schräg zulaufender Bereich 142 vorgesehen, der als Einführhilfe und zur Auslenkung der Rastschulter 182 während des Montagevorganges des Anschlussbereiches 110 innerhalb der Muffe 180 dient.

Das Material 188 der Muffe 180 kann sowohl als separates Verbindungsteil ausgebildet sein, in das die anzuschließenden Rohre einzuführen sind, als auch unmittelbar an dem Verbindungsbereich 110 des Rohres 120 angespritzt sein und somit bereits für die Montage vorbereitet sein.

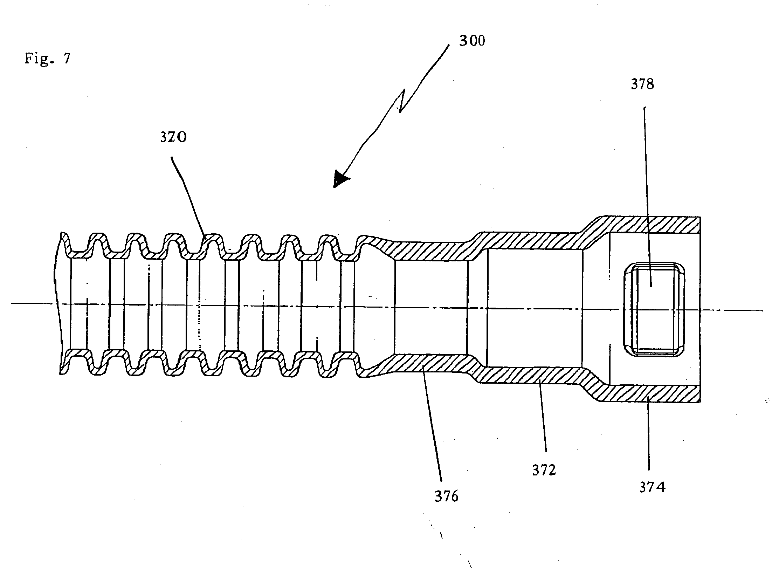

In den Fig. 7 bis 11 dargestellte gleiche oder wenigstens gleich wirkende Mittel sind mit einander entsprechenden Bezugszeichen benannt (483 entspricht 583 entspricht 683), wobei Bestandteile der Fig. 1 bis 4 im Wesentlichen mit den gleichen Bezugszeichen benannt sind.

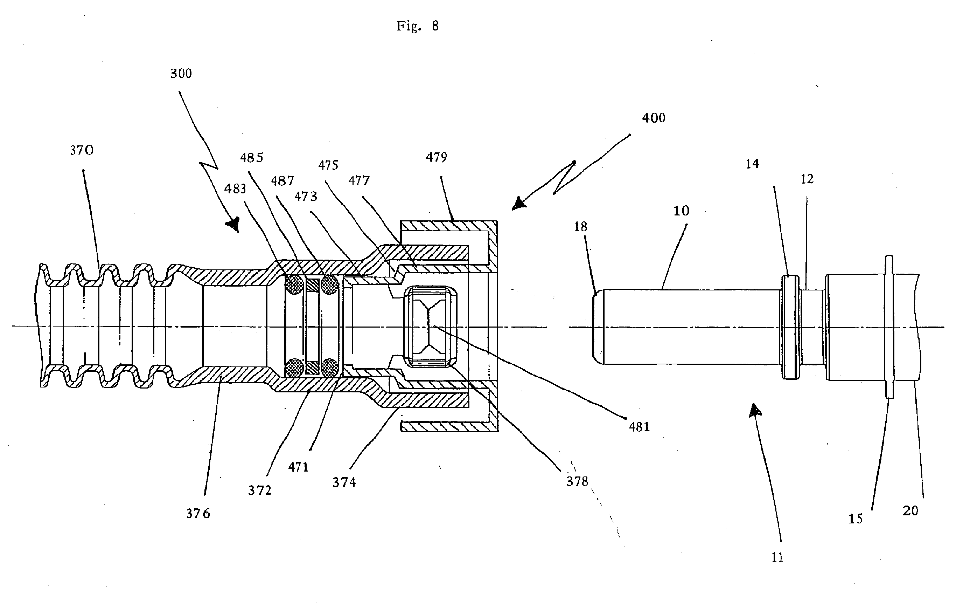

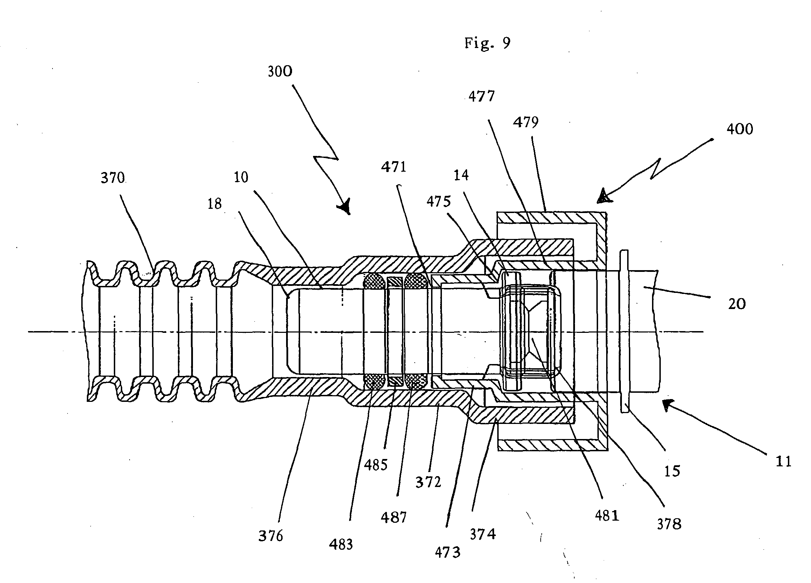

Aus Fig. 7 ist eine Ausführungsform einer Kunststoffwellrohr-Verbindungsanordnung 300 gemäß der Erfindung teilweise ersichtlich. Gemäß der dargestellten Anordnung 300 weist ein Wellrohrabschnitt 370 an wenigstens einem Ende einen Stutzenabschnitt auf, der wenigstens einen innen glattwandigen Bereich 372 aufweist. In der dargestellten Ausführungsform gemäß Fig. 7 ist zwischen dem Wellrohrabschnitt 370 und dem wenigstens einem innen glattwandigen Bereich 372 mit einem ersten Durchmesser noch ein weiterer innen glattwandiger Bereich 376 vorgesehen. An dem dem Wellrohrabschnitt 370 abgewandten Ende des ersten Bereiches 372 mit einem ersten Durchmesser ist ein zweiter Bereich 374 mit einem anderen Durchmesser vorgesehen. An diesem zweiten Durchmesserbereich 374 ist ein Riegelabschnitt 378 vorgesehen. Dieser Riegelabschnitt 378 ist hier als Ausbuchtung angeordnet, kann aber auch als Einbuchtung ausgebildet sein. Dieser Riegelabschnitt 378 dient dazu, mit einer korrespondierenden Ausbildung an einer Konnektoreinrichtung in einen Halteeingriff treten zu können (siehe Fig. 8 und 9).

In Fig. 8 und in Fig. 9 sind gleiche oder entsprechende Bestandteile mit den gleichen Bezugszeichen wie in Fig. 7 gekennzeichnet. Eine doppelte Beschreibung erübrigt sich deshalb. Der Stutzenabschnitt 300 mit anschließendem Wellrohrabschnitt ist mit zwei Dichteinrichtungen 483, 487 ausgestattet, die hier beispielsweise O-Ringe etwa aus Gummi sind. Die O-Ringe 483, 487 kommen innerhalb des ersten wenigstens innen glattwandigen Durchmesserbereiches 372 zum Liegen. Zwischen den O-Ringen 483, 487 ist ein Abstandsring 485 eingefügt, der einen unmittelbaren Kontakt der O-Ringe 483, 487 zueinander verhindert. Hierdurch kann verhindert werden, dass sich die O-Ringe 483, 487 undefiniert verformen, wenn etwa ein axial einwirkender Druck oder auch ein radial einwirkender Druck auf die O-Ringe einwirkt. Eine Konnektoreinrichtung 400 weist einen Korrespondenzabschnitt 481 auf, der mit dem Riegelabschnitt 37 in eine Haltestellung bringbar ist, um die Konnektoreinrichtung an den Stutzenabschnitt 300 fixieren zu können. Hier ist es möglich, sowohl eine Rastverbindung als auch eine Schraubverbindung, eine Schnappverbindung oder andere Verbindungsarten zu realisieren.

Die Konnektoreinrichtung 400 weist einen Kragenabschnitt 479 auf, der den Stutzenabschnitt teilweise außenumfänglich überlappend umgibt, wobei in diesem Falle vorteilhafter Weise der Korrespondenzabschnitt 481 am Innenumfang des Kragenabschnittes 479 vorgesehen ist, während der Riegelabschnitt am Außenumfang des Stutzenabschnittes 300 angeordnet ist.

Bei der dargestellten Ausführungsform weist die Konnektoreinrichtung 400 zwei Bereiche 477, 473 mit unterschiedlichen Durchmessern auf, korrespondierend zu den unterschiedlichen Durchmessern der Durchmesserbereiche 372, 374 des Stutzenabschnittes 300. Ein Schulterabschnitt 475, der sich zwischen den Durchmesserbereichen 473 und 477 der Konnektoreinrichtung 400 ergibt, dient als Anlageabschnitt für die radial abstehende Rippe 14 des Glattbereiches 10 des anzuschließenden Wellrohres 20. Am Ende des Durchmesserbereiches 473 der Konnektoreinrichtung 400 ist eine Andruckfläche 471 ausgebildet, über die im Bedarfsfalle auch Druck auf die Dichtelemente bzw. O-Ringe 483, 487 ausgeübt werden kann, um eine Dicht- und/oder Haltefunktion der Bestandteile 483, 387 zu verbessern.

In Fig. 9 ist erkennbar, wie der Glattbereich 10 des Wellrohres 20 in dem Stutzenbereich 300 des Wellrohres 370 eingreift. Dabei werden die O-Ringe 483, 487 gleichmäßig verformt (in der Darstellung sind die O-Ringe rein schematisch nur einseitig verformt). Wird die Konnektoreinrichtung 400 in Axialrichtung etwa durch Verschrauben festgelegt, kann auch in Axialrichtung durch die Anpressfläche 471 ein Druck auf die O-Ringe ausgeübt werden. Das Wellrohr 11 mit dem daran anschließenden Glattbereich kann dann besonders nachhaltig an dem Stutzenabschnitt 300 festgelegt werden. Hierbei dienen die Rippe 14 und eine weitere Rippe 15 dazu, definierte, von außen sichtbare oder durch Anschlag fühlbare Positionen und Stellungen zwischen den einzelnen Bestandteilen der erfindungsgemäßen Anordnung einrichten zu können.

Erkennbar ist es ein wesentlicher Bestandteil der Erfindung, eine Möglichkeit vorzusehen, jeweilige Anlageabschnitte, die vorteilhafter Weise glattwandig sind, am Innenbereich des Stutzenabschnittes 300 und am Außenbereich des glattwandigen Abschnittes 10 vorzusehen, zwischen denen eine dichtende und haltende Verpressung der O-Ringe erfolgen kann. Ferner ist es ein wesentliches Element der Erfindung einen Halteabschnitt vorzusehen, etwa in der Form des Regelabschnittes bzw. des Korrespondenzabschnittes 481, 378, um eine Konnektoreinrichtung, das anzuschließende Wellrohr 20 mit dem Glattbereich 10 haltend, festlegen zu können.

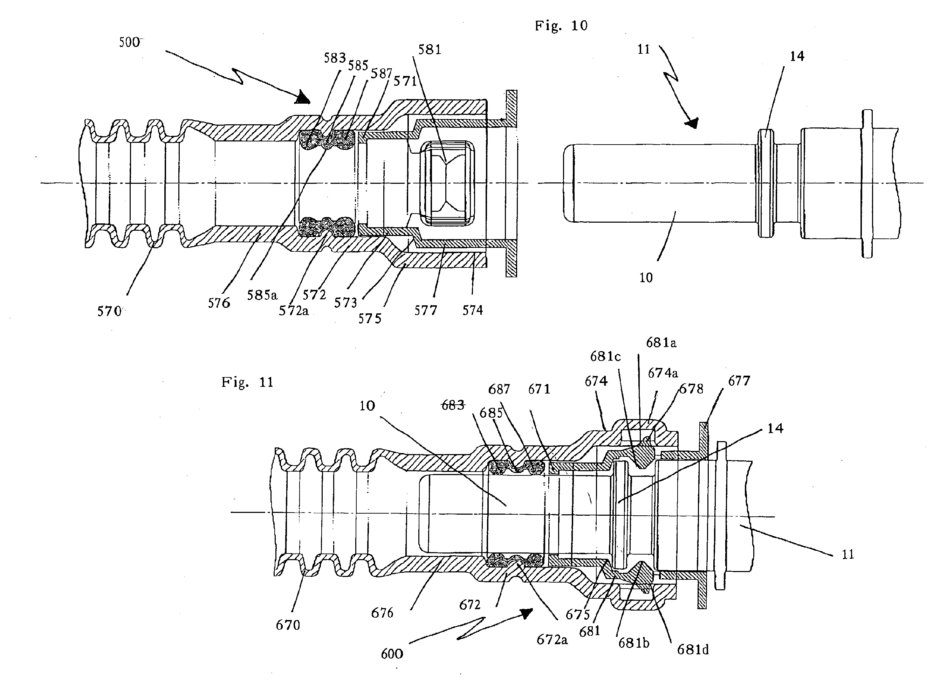

In Fig. 10 dargestellte Bestandteile, die im Verlaufe der Beschreibung voranstehender Ausführungsformen erläutert worden sind, werden nicht zusätzlich erörtert. In Fig. 10 schließt an ein Wellrohr 570 integral ein Anschlussabschnitt 500 an. In diesem Anschlussabschnitt 500 ist ein Stutzenabschnitt mit einem ersten Durchmesser 572 vorgesehen, der an seinem Innenumfang mit einem Haltefunktionsbereich 572a ausgebildet ist. In der dargestellten Ausführungsform ist dieser Eingriffsfunktionsbereich 572a als radial einwärts gerichtete Erstreckung ausgebildet. Natürlich kann diese auch anders ausgebildet sein, beispielsweise als radial auswärts erstreckte Rille oder dgl., wobei dann ein einstückig ausgebildetes Dicht- und/oder Halteelement 583, 585, 587 vorgesehen wird, das einen Haltefunktionsbereich 585 aufweist, der das einstückig hergestellte Teil 583, 585, 587 in seiner Position innerhalb des Stutzenabschnittes und insbesondere innerhalb des ersten Durchmesserbereiches 572 zu halten vermag.

Im vorliegenden Falle schließt an den Haltefunktionsbereich symmetrisch in Axialrichtung auf beiden Seiten ein Dichtfunktionsbereich 583, 587 an. Auch der Haltefunktionsbereich kann, um eine zusätzliche Dichtwirkung zu erbringen, mit einer Dichtfläche 585a ausgestattet sein. Es ist allerdings auch möglich, lediglich mit einem Dichtfunktionsbereich 583 bzw. 587 auszukommen, oder beide oder auch mehrere Dichtfunktionsbereiche 583, 587 einseitig, d.h., asymmetrisch, in Axialrichtung an den Haltefunktionsbereich 585 anschließen zu lassen. Die übrigen in Fig. 10 dargestellten Bestandteile entsprechen im Wesentlichen den Bestandteilen voranstehend erläuterter Ausführungsformen und brauchen insoweit nicht mehr erörtert werden.

Die Fig. 11 zeigt eine weitere Ausführungsform einer erfindungsgemäßen Kunststoffwellrohr-Verbindungsanordnung 600 in einen Wellrohrabschnitt 670, der einstückig ausgebildet an einem Stutzenabschnitt mit einem Durchmesserbereich 672 anschließt. Bei der hier dargestellten Ausführungsform lässt sich konkret eine Ausbildung der Konnektoreinrichtung erkennen, die mit einem Riegelabschnitt 678 in einem Korrespondenzabschnitt 674a des Stutzenabschnittes 674 mit einem zweiten Durchmesser zum Halten zu bringen ist. Der Riegelabschnitt 678 weist einen Widerlagervorsprung 681d auf, der mit einem Rad des Abschnitts 674a in einen Halteeingriff bringbar ist. Dabei kann der den Riegelabschnitt 678 aufweisende Bereich der Konnektoreinrichtung so mit einer Leitfläche 681a ausgebildet sein, dass der Riegelabschnitt 678 in der axialen Richtung, in der die Konnektoreinrichtung in den Stutzenabschnitt eingesteckt werden kann, radial einwärts zum Ausweichen bringbar ist, um dann in die Halteposition in dem Korrespondenzabschnitt 674a zurückschnellen zu können, um eine zuverlässige Festlegung der Konnektoreinrichtung sicherstellen zu können. Gegenüberliegend zu dem Riegelabschnitt 678 kann die Konnektoreinrichtung einen Korrespondenzabschnitt 681 mit einem Eingriffsabschnitt 681b aufweisen, der hinter den Widerlagerabschnitt 14 des Wellrohradapterbereiches 10, 12, 14 einzugreifen vermag, der unter Bezugnahme auf die voranstehenden Fig. 1 bis 6 näher erläutert worden ist. Somit kann der Glattbereich 10, 12 und damit der Anschlussbereich des Rohres 11, gerne auch als "Vaterteil" bezeichnet, über die Konnektoreinrichtung zuverlässig innerhalb des Stutzenabschnittes zum Halten gebracht werden, wobei das einstückig hergestellte Dicht- und/oder Halteelement 683, 685, 687 zusätzlich Dichtfunktionen bereitstellen kann.

Die Ausführungsform 600 ist reversibel ausgebildet, d.h., der Anschlussbereich 10 des Wellrohres 11 lässt sich ohne Zerstörung aus der Verbindungsanordnung ausbauen, während die Verbindung ansonsten unlösbar ist. Dies wird dadurch erreicht, dass, wenn an dem Wellrohr 11 gezogen wird, dieses zusammen mit der Konnektoreinrichtung eine Zugbelastung erfährt, so dass der Widerlagervorsprung 681d an den Rand des Korrespondenzabschnittes 674a anstößt, so dass der Riegelabschnitt 678 radial gesperrt ist.

Der Riegelabschnitt 678 kann folglich nicht nach außen ausweichen und der Eingriffsabschnitt 681b verharrt in der Eingriffsstellung und hält das Rohr 11 über dem Widerlagerabschnitt 14 fest.

Wird über einen Kragenbereich 677 eine in Rohrfestlegungsrichtung wirkende Schubkraft auf die Konnektoreinrichtung ausgeübt, während am Rohr 11 gezogen wird, gelangt der Widerlagervorsprung 681d in keine Sperrstellung am Korrespondenzabschnitt 674a und kann folglich radial ausweichen. Wenn also die Rückseite des Widerlagerabschnitts 14 des Rohres 11 auf eine Führungsfläche 681c des Regelabschnitts 678 stößt, wird der Regelabschnitt 678 radial nach außen ausgehängt und der Widerlagerabschnitt 14 und damit das Rohr 11 gelangen außer Eingriff und werden freigegeben.

Somit kann ein Wellrohranschlussabschnitt 10, 14 einerseits sicher gehalten werden, und andererseits aber auch leicht gelöst werden.

## Patentansprüche

1. Wellrohr-Verbindungsanordnung mit einem Wellrohr (20) mit quer zu seiner Längserstreckungsrichtung erstreckten Wellungen (22, 24), die im wesentlichen in gleichen Abständen zueinander angeordnet sein können, wobei das Wellrohr an wenigstens einem Ende mit einem einstückigen Glattbereich (10) ausgebildet ist, der einen Widerlagerabschnitt (14) umfasst, und mit einem Verbindungselement (50), das mit dem Glattbereich (10) zusammenführbar ist und mit dem Widerlageabschnitt (14) in Eingriff bringbar ist.

2. Wellrohr-Verbindungsanordnung nach Anspruch 1, **dadurch gekennzeichnet, dass** der Widerlageabschnitt (14) wenigstens teilumfänglich, bevorzugt vollumfänglich ausgebildet ist.

3. Wellrohr-Verbindungsanordnung nach einem der Ansprüche 2 bis 3, **dadurch gekennzeichnet, dass** der Widerlagerabschnitt als radial abstehende Rippe (14) als Ring oder dgl. ausgebildet ist.

4. Wellrohr-Verbindungsanordnung nach einem der Ansprüche 2 bis 3, **dadurch gekennzeichnet, dass** der Widerlagerabschnitt dadurch ausgebildet ist, dass der Glattbereich eine Einschnürung aufweist und jenseits der Einschnürung auf einem Durchmesser zurückgeht, der größer als der der Einschnürung ist, so dass der Widerlagerabschnitt als radial abstehende Rippe (14') als Ring der dgl. ausgebildet ist.

5. Wellrohr-Verbindungsanordnung nach einem der Ansprüche 1 bis 4, **dadurch gekennzeichnet, dass** zwischen den die Wellungen (22) aufweisenden Abschnitt (20) und dem Widerlageabschnitt ein Anschlussabschnitt (12) angeordnet ist.

6. Wellrohr-Verbindungsanordnung nach Anspruch 5, **dadurch gekennzeichnet, dass** der Verschlussabschnitt eben ist.

7. Wellrohr-Verbindungsanordnung nach einem der Ansprüche 1 bis 6, **dadurch gekennzeichnet, dass** das Verbindungselement (50) wenigstens eine Dichteinrichtung (14), insbesondere einen O-Ring umfasst, die mit dem Glattbereich (10) in eine dichtende Anlage bringbar ist.

8. Wellrohr-Verbindungsanordnung nach einem der Ansprüche 1 bis 7, **dadurch gekennzeichnet, dass** das Verbindungselement (50) eine Anlageeinrichtung (62 umfasst, die in einen Aufnahmeraum (56) für den Glattbereich (10), diesen umgebend, einfügbar ist.

9. Wellrohr-Verbindungsanordnung nach einem der Ansprüche 7 oder 8, **dadurch gekennzeichnet, dass** das Dichtelement (64) zwischen der Anlageeinrichtung (62) und einem Schulterbereich (57) aufgenommen ist.

10. Wellrohr-Verbindungsanordnung nach einem der Ansprüche 8 oder 9, **dadurch gekennzeichnet, dass** die Anlageeinrichtung (62) eine Radialerstreckung (63) aufweist, die auswärts erstreckt ist, die in eine Rastausnehmung (61) einzugreifen vermag,

11. Wellrohr-Verbindungsanordnung nach einem der Ansprüche 1 bis 10, **dadurch gekennzeichnet, dass** ein Verschlusselement (58) am Verbindungselement (50) vorgesehen ist, das radial einwärts erstreckt ist, das über wenigstens eine Ausnehmung (59) in dem Verbindungselement bevorzugt reversibel in Widerlager gegenüber dem Widerlagerabschnitt (14) bringbar ist.

12. Wellrohr-Verbindungsanordnung nach Anspruch 11, **dadurch gekennzeichnet, dass** das Verschlusselement (58) als etwa gabelartiges Sperrglied, als verschwenkbares und verrastbares Filmscharniersperrelement oder dgl. ausbildbar ist.

13. Wellrohr-Verbindungsanordnung nach einem der Ansprüche 1 bis 12, **dadurch gekennzeichnet, dass** die Rohrwandung im Bereich des Glattbereiches (10) dicker ausgebildet ist, als im gewellten Bereich.

14. Wellrohr-Verbindungsanordnung nach einem der Ansprüche 1 bis 13, **dadurch gekennzeichnet, dass** das Verbindungselement an das Ende (110) des Wellrohres unmittelbar angeformt, etwa angespritzt ist.

15. Wellrohr mit wenigstens einem Wellrohrabschnitt (20) und wenigstens einem Endbereich, wobei der Endbereich einstückig als Glattbereich (10, 12) mit dem Wellrohrabschnitt ausgebildet ist, wobei in dem Verlauf des Glattbereiches ein Widerlagerabschnitt (14) ausgebildet ist.

16. Wellrohr nach Anspruch 15, **dadurch gekennzeichnet, dass** der Glattbereich eine dickere Wandung aufweist als der Wellrohrabschnitt (20).

17. Wellrohr nach einem der Ansprüche 15 oder 16, **dadurch gekennzeichnet, dass** der Widerlagerabschnitt (14) wenigstens teilumfänglich, bevorzugt vollumfänglich ausgebildet ist.

18. Wellrohr nach einem der Ansprüche 15 bis 17, **dadurch gekennzeichnet, dass** der Widerlagerabschnitt als radial abstehende Rippe (14), als Ring oder dgl. ausgebildet ist.

19. Wellrohr nach einem der Ansprüche 15 bis 18, **dadurch gekennzeichnet, dass** zwischen dem die Wellungen (22) aufweisenden Abschnitt (20) und dem Widerlagerabschnitt ein Anschlussabschnitt (12) angeordnet ist.

20. Wellrohr nach einem der Ansprüche 15 bis 19, **dadurch gekennzeichnet, dass** der Anschlussabschnitt eben bzw. glatt ist.

21. Wellrohr-Verbindungsanordnung mit einem Wellrohr (120') mit quer zu seiner Längserstreckungsrichtung erstreckten Wellungen, wobei das Wellrohr (120') an wenigstens einem seiner Endbereiche mit einem integral mit dem Wellrohr ausgebildeten Anschlussbereich (128) versehen ist, der in einen Muffenverbindungsabschnitt (186, 180) einführbar ist, wobei der Anschlussbereich (128) zur Verbindung mit dem Muffenverbindungsabschnitt (186) mit wenigstens einem, bevorzugt mehreren in der Einschubrichtung zur Verbindung mit dem Muffenverbindungsabschnitt zulaufenden sägezahnartigen Profilen (130) versehen ist, die in Anlage zu dem Innenumfang des Muffenverbindungsabschnittes (186) bringbar sind.

22. Wellrohr-Verbindungsanordnung nach Anspruch 20, **dadurch gekennzeichnet, dass** der Innenumfang des Muffenverbindungsabschnittes (186, 180) wenigstens bereichsweise vollumfänglich glattwandig ist.

23. Wellrohr-Verbindungsanordnung nach einem der Ansprüche 20 oder 21, **dadurch gekennzeichnet, dass** das sägezahnartige Profil (130) in der Einschubrichtung eine ansteigende Flanke (134) hat, die in Bezug auf die Einschubrichtung spitzwinklig ist.

24. Wellrohr-Verbindungsanordnung nach einem der Ansprüche 20 bis 22, **dadurch gekennzeichnet, dass** das sägezahnartige Profil (130) auf der der Einschubrichtung in dem Muffenverbindungsabschnitt abgewandten Seite eine steil fallende Flanke (132) aufweist.

25. Wellrohr mit wenigstens einem Wellrohrabschnitt (120') und wenigstens einem Anschlussbereich (121), wobei der Anschlussbereich einstückig mit dem Wellrohrabschnitt ausgebildet ist, und der Anschlussbereich (128) mit wenigstens einem, bevorzugt mehreren in der Einschubrichtung zur Verbindung mit einem Verbindungsabschnitt zulaufenden sägezahnartigen Profil (130) versehen ist.

26. Wellrohr nach Anspruch 25, **dadurch gekennzeichnet, dass** das sägezahnartige Profil (130) in der Einschubrichtung eine ansteigende Flanke (134) hat, die in Bezug auf die Einschubrichtung spitzwinklig ist.

27. Wellrohr nach einem der Ansprüche 25 oder 26, **dadurch gekennzeichnet, dass** das sägezahnartige Profil (130) auf der Rückseite der ansteigenden Flanke (134) eine steil abfallende Flanke (132) aufweist, die entgegengesetzt zur Einschubrichtung einen großen Widerstand in Bezug auf Ausreißkräfte entstehen lässt.

28. Kunststoffwellrohr-Verbindungsanordnung mit einem Kunststoffwellrohrabschnitt (370, 470, 570, 670) mit quer zu seiner axialen Erstreckungsrichtung erstreckten Wellung, mit einem integral ausgebildeten Stutzenabschnitt (372, 374, 376) an wenigstens einem Ende, wobei der Stutzenabschnitt einen ersten Durchmesserbereich (372) aufweist, wobei in den ersten Durchmesserbereich wenigstens ein Dicht- und/oder Halteelement einsetzbar ist, bevorzugt axial gehalten durch eine Konnektoreinrichtung.

29. Kunststoffwellrohr-Verbindungsanordnung nach Anspruch 28, **dadurch gekennzeichnet, dass** die Konnektoreinrichtung (400) eine Andruckfläche (471) umfasst, die auf eines der Dicht- und/oder Halteelemente aufsetzbar ist.

30. Kunststoffwellrohr-Verbindungsanordnung nach einem der Ansprüche 28 oder 29, **dadurch gekennzeichnet, dass** das Dicht- und/oder Halteelement aus einem einstückig hergestellten Teil (583, 585, 587) aufgebaut ist, das einen Haltefunktionsbereich (585) und wenigstens einen Dichtfunktionsbereich (583, 585) umfasst.

31. Kunststoffwellrohr-Verbindungsanordnung nach Anspruch 30, **dadurch gekennzeichnet, dass** korrespondierend zu dem Haltefunktionsbereich (585) des einstückig hergestellten Teils ein Eingriffsfunktionsbereich (572a, 672a) am Innenumfang des ersten Durchmesserbereiches vorgesehen ist, der das einstückig hergestellte Teil in Axialrichtung hält.

32. Kunststoffwellrohr-Verbindungsanordnung nach einem der Ansprüche 30 oder 31, **dadurch gekennzeichnet, dass** das einstückig hergestellte Teil zwei Dichtfunktionsbereiche (583, 587) umfasst, die in Axialrichtung der Anordnung symmetrisch oder asymmetrisch zu dem Haltefunktionsbereich angeordnet sind, wobei insbesondere der Haltefunktionsabschnitt zusätzlich eine innenumfänglich vorgesehene Dichtfläche aufweisen kann.

33. Kunststoffwellrohr-Verbindungsanordnung nach einem der Ansprüche 28 oder 29, **dadurch gekennzeichnet, dass** mehrere Dicht- und/oder Halteelemente bevorzugt mit dazwischenliegendem Abstandsring(en) (485) vorgesehen sind.

34. Kunststoffwellrohr-Verbindungsanordnung nach Anspruch 30, **dadurch gekennzeichnet, dass** am Außen- und/oder am Innenumfang des Stutzenabschnittes (300) wenigstens ein Riegelabschnitt (378, 678) vorgesehen ist, der mit einem Korrespondenzabschnitt (481) der Konnektoreinrichtung (400) in eine Verriegelungsstellung hinweist, wobei bevorzugt der Riegelabschnitt (378, 678) und der Konnektorabschnitt eine Rastverbindung, eine Schraubverbindung, eine Bajonettverbindung oder dgl. ergeben.

35. Kunststoffwellrohr-Verbindungsanordnung nach Anspruch 31, **dadurch gekennzeichnet, dass** zwei am Außenumfang des Stutzenumfangs einander gegenüber liegende Riegelausbuchtungen vorgesehen sind, die mit zugeordneten Korrespondenzabschnitten in Eingriff bringbar sind.

36. Kunststoffwellrohr-Verbindungsanordnung nach einem der Ansprüche 28 bis 32, **dadurch gekennzeichnet, dass** der Stutzenabschnitt (300) einen zweiten und/oder einen dritten Durchmesserbereich (376, 374) aufweist, wobei wenigstens einer vor und wenigstens einer hinter dem ersten Durchmesserbereich (372) angeordnet ist.

37. Kunststoffwellrohr-Verbindungsanordnung nach einem der Ansprüche 28 bis 33, **dadurch gekennzeichnet, dass** die Konnektoreinrichtung (400) einen Kragen (479) aufweist, an dessen Innenumfang der bzw. die Korrespondenzabschnitte (481) vorgesehen sind.

38. Kunststoffwellrohr-Verbindungsanordnung nach einem der Ansprüche 28 bis 34, **dadurch gekennzeichnet, dass** die Konnektoreinrichtung einen Schulterabschnitt (475) an seinem Innenumfang aufweist.

39. Kunststoffwellrohr-Verbindungsanordnung nach einem der Ansprüche 28 bis 38, **dadurch gekennzeichnet, dass** ein Riegelabschnitt (678) einen Widerlagervorsprung (681d) aufweist, der den Riegelabschnitt (678) bei Zugbelastung gegen radiales Ausweichen sichert.

40. Kunststoffwellrohr-Verbindungsanordnung nach den Ansprüchen 28 bis 39, **dadurch gekennzeichnet, dass** der Riegelabschnitt (678) eine Führungsfläche (681c) aufweist, die dem zu haltenden Rohr (10, 11) zugewandt ist und den Riegelabschnitt radial nach außen auslenkt, wenn eine Zugkraft auf das Rohr ausgeübt wird, wobei das Rohr über einen Widerlagerabschnitt (14) auf die Führungsfläche (681c) einwirkt, insbesondere wenn auf die Konnektoreinrichtung eine Schubkraft ausgeübt wird.

41. Kunststoffwellrohr mit einem Kunststoffwellrohrabschnitt und mit einer Kunststoffwellrohr-Verbindungsanordnung nach wenigstens einem der Ansprüche 1 bis 24 an einem Ende des Kunststoffwellrohrabschnittes und mit einer Kunststoffwellrohr-Verbindungsanordnung nach einem der Ansprüche 28 bis 35 an dem anderen Ende des Kunststoffwellrohrabschnittes.
